# EUROPEAN PATENT SPECIFICATION

(11) **EP 3 323 211 B1**
(45) Date of publication and mention of the grant of the patent: **24.03.2021**
(21) Application number: 15897955.9
(22) Date of filing: 13.07.2015
(51) Int. Cl.: H04W 74/00, H04W 74/08

(54) **CONTENTION BASED RADIO RESOURCE MANAGEMENT FOR SMALL PACKET TRANSMISSION**
KONFLIKTBASIERTES FUNKRESSOURCENMANAGEMENT ZUR ÜBERTRAGUNG KLEINER PAKETE
GESTION DE RESSOURCES RADIO BASÉE SUR LA CONCURRENCE, POUR LA TRANSMISSION DE PETITS PAQUETS

(43) Date of publication of application: 23.05.2018
(73) Proprietor: Nokia Solutions and Networks Oy, 02610 Espoo (FI)
(72) Inventor: LI, Hongchao, Beijing 100102 (CN); ZHENG, Naizheng, Beijing 100098 (CN); PEDERSEN, Klaus Ingemann, DK-9000 Aalborg (DK)
(74) Representative: Nokia EPO representatives
(86) International application number: PCT/CN2015/083892
(87) International publication number: WO 2017/008227

(56) References cited:
- WO-A1-2007/078177
- US-A1- 2008 267 126
- US-A1- 2012 269 156
- US-A1- 2013 070 719
- US-A1- 2014 328 329
- SONY: "Open Issues on RRC Signalling for resource authorization", 3GPP DRAFT; R2-144405 OPEN ISSUES ON RRC SIGNALLING FOR RESOURCE AUTHORIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Shanghai, China; 20141006 - 20141010 5 October 2014 (2014-10-05), XP050876608, Retrieved from the Internet: URL:http://www.3gpp.org/ftp/Meetings_3GPP_ SYNC/RAN2/Docs/ [retrieved on 2014-10-05]
- ZTE: "Resource allocation for D2D communication", 3GPP DRAFT; R2-140693 RESOURCE ALLOCATION FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech; 20140210 - 20140214 9 February 2014 (2014-02-09), XP050791993, Retrieved from the Internet: URL:http://www.3gpp.org/ftp/Meetings_3GPP_ SYNC/RAN2/Docs/ [retrieved on 2014-02-09]

## Description

### Field of the invention

The present invention relates to an apparatus, a method, and a computer program product related to contention based radio resource management. More particularly, the present invention relates to an apparatus, a method, and a computer program product related to contention based radio resource management if the transmission is otherwise scheduled.

Abbreviations
- 3GPP: 3rd Generation Partnership Project
- 5G: 5^{th} Generation
- CRC: Cyclic Redundancy Check
- C-RNTI: Cell Radio Network Temporary Identifier.
- D2D: Device to Device (Communication)
- DL: Downlink
- E2E: End to End
- GSM: Global System for Mobile Communication
- LTE: Long Term Evolution
- LTE-A: LTE Advanced
- MCS: Modulation and Coding Scheme
- PHY: Physical (layer)
- QoS: Quality of Service
- RAN: Radio Access Network
- RG: Resource Group
- RP: Resource Pool
- RRC: Radio Resource Control
- RU: Resource Unit
- SIB: System Information Block
- SRS: Sounding Reference Signal
- TB: Transport Block
- TTI: Transmission Time Interval
- Tx: Transmit
- UE: User Equipment
- UL: Uplink
- V2V: Vehicle to Vehicle (Communication)
- V2X: Vehicle to eXternal (Communication)
- WG: Working Group
- X2: The interface used to interconnect eNodeBs

### Background of the invention

In 5G or next generation wireless systems beyond LTE/LTE-A small packet-oriented design may be specially handled. In this context, a small packet is a moderate size payload that typically can be send on the air interface in a single transport block, consuming only a fraction of the available radio resources of the cell. Thus, expedition of small packets are considered expensive in terms of signaling overhead if using traditional scheduled access mechanisms. For such case, the physical layer resource management and scheduling methodology need to accommodate a small payload feature to achieve high transmission efficiency in terms of low control overhead and lower End to End latency.

It is known from industrial and academic sources that small packet transmission has numerous demands from both commercial and public safety use cases, e.g. smart metering, catastrophe monitoring, intelligent home, Vehicle-to-Vehicle and Vehicle-to-X (pedestrian/infrastructure), etc. There may also be some applications installed on Smartphone and other consumer electronics that interacts with network or peers by quite small payloads.

In general, currently running LTE/LTE-A or even GSM networks can serve this purpose. However, the flaws are obvious that:
a. For LTE/LTE-A, the system and control procedure was designed mainly for broadband and high data rate. Hence, for small payloads, the transmission efficiency may be degraded since the control overhead is relatively large compared with the physical transmission block size. Although semi-persistent scheduling was introduced to reduce control overhead, it is not flexible enough to accommodate various traffic types.
b. It is required by some applications (e.g. V2V/V2X) and also proposed by some studies that the E2E latency of delivering small payload should be further shortened. Current framework of LTE control procedure is schedule based and may not fulfil the requirement, especially for UL scheduling.
c. Due to the limit of control overhead, the simultaneously served terminal number can not meet requirement of some scenarios supporting massive terminal accessing.

Thus, in order to facilitate the small packet transmission and accommodate it into a multicarrier system, UL contention based scheme is proposed to be employed. Air interface resource grid could be customized and also the corresponding control procedures and designs need further consideration.

In contention based transmission, from the network's point of view, any terminal which is allowed to perform the contention based transmission may transmit data on the channel, for which the contention based transmission is allowed, at any time (first come-first served). To avoid collision, a carrier sensing mechanism may be used. Here each terminal listens to the channel before attempting to transmit.

Small packet-oriented design related study in physical layer has not been deeply studied yet in 3GPP. In 3GPP RAN WG1, some research regarding machine type communication focused on coverage enhancement, low complexity and power consumption reduction. The prior art covers some outcomes from 3GPP, research papers targeting for 5G, and also patent documents:
1. 3GPP TS 36.213
2. 3GPP TS 36.331
3. 3GPP TR 36.888, Study on provision of low-cost Machine-Type Communications (MTC) User Equipments (UEs) based on LTE
4. Kelvin Au, Liqing Zhang, Hosein Nikopour, Eric Yi, Alireza Bayesteh, Usa Vilaipornsawai, Jianglei Ma, and Peiying Zhu, "Uplink Contention Based SCMA for 5G Radio Access", Huawei
5. Y. Chen and W. Wang, "Machine-to-Machine Communication in LTEA"

R2-144405, "Open Issues on RRC Signalling for resource authorization" by Sony; 3GPP TSG-RAN WG2 Meeting #87bis; Shanghai, China, 6th - 10th Oct 2014, discusses issues relating to RRC signalling for Device-to-Device (D2D) communication and discovery. It proposes that the Type 1 resource pool is signalled in SIB, while the authorisation for using resources from this pool can be signaled in RRCConnectionSetup / RRCConnectionReconfiguration messages.

US 20140328329A1 relates to Device-to-Device (D2D) communication systems and proposes a protocol for D2D communications in hybrid deployment scenarios. Accordingly, it proposes that an eNB configures one or more pools of Device-to-Device (D2D) communication resources, signals information about the configured pools to a first UE and a plurality of UEs using a common broadcast channel. Upon reception of a request for one or multiple D2D communication resources from the first UE, wherein the first UE is configured to transmit D2D messages, the eNB determines one or multiple resources for D2D communication for the first UE, and communicates a D2D resource allocation information to the first UE, wherein the first UE is configured to communicate the D2D resource allocation information to one or more of the plurality of UEs and transmit D2D data to one or more of the plurality of UEs.

Some of the citations above specify resource pool design for D2D (Device to Device) Proximity Service. But the structure of resource pool and control procedure does not consider transmission efficiency for small packet design. Some other citations provide some solutions for contention based random access or UL data transmission.

### Summary of the invention

The invention is set in the appended claims.

It is an object of the present invention to improve the prior art.

According to a first aspect of the invention, there is provided an apparatus, comprising configuration informing means adapted to inform on one or more resource pools comprised by a set of resource pools, wherein each of the resource pools comprises respective one or more resource units, and each of the resource units is defined by at least one of a respective frequency band, a respective time period, and a respective coding space, control means adapted to control a terminal device such that, if the terminal device wants to perform a contention based transmission, the contention based transmission may be performed on at least one of the resource pools of the set.

The configuration informing means may be adapted to inform on the one or more resource pools by broadcasting. The configuration informing means may be adapted to inform on the one or more resource pools by dedicated signaling to the terminal device.

The control means may be adapted to indicate a number of the resource pools of the set on which the terminal device may perform the contention based transmission if the set of resource pools comprises plural resource pools.

The apparatus may further comprise at least one of time indicating means adapted to indicate a time duration during which the terminal device may perform the contention based transmission; validity indicating means adapted to indicate a validity duration of the set; and granularity indicating means adapted to indicate a respective granularity into which frequency band, the time period, and the coding space is divided.

The apparatus may further comprise deriving means adapted to derive, for at least one of the resource pools of the set, at least one of a respective modulation scheme and a respective coding scheme; scheme informing means adapted to inform the terminal device on the at least one of the respective modulation scheme and the respective coding scheme for the at least one of the resource pools.

The apparatus may further comprise tag providing means adapted to provide, for at least one of the resource pools of the set, a respective tag to the terminal device, wherein each of the tags comprises information on at least one of a channel condition of the respective resource pool, a load status of the respective resource pool, and an expected capacity of the respective resource pool.

The apparatus may further comprise forbidding means adapted to forbid the terminal device to perform the contention based transmission on the at least one of the resource pools of the set.

The apparatus may further comprise at least one of evaluating means adapted to evaluate the contention based transmission received from the terminal; and scheduling inhibiting means adapted to inhibit scheduling of a scheduled transmission on the set of the resource pools.

According to a second aspect of the invention, there is provided an apparatus, comprising configuration learning means adapted to learn about one or more resource pools comprised by a first set of resource pools based on a received first configuration message, wherein each of the resource pools comprises respective one or more resource units, and each of the resource units is defined by at least one of a respective frequency band, a respective time period, and a respective coding space; selecting means adapted to select at least one selected resource pool out of the first set of resource pools based on a received control indication that a contention based transmission may be performed on the at least one selected resource pool; instructing means adapted to instruct a transmitting device to perform the contention based transmission on the respective at least one of the frequency band, the time period, and the coding space of the at least one selected resource pool.

The first configuration message may be comprised in a broadcasting signal. The first configuration message may be comprised in a dedicated signaling to the apparatus.

The first set of resource pools may comprise plural resource pools, and the received control indication may indicate a number of the resource pools of the first set for which the instructing means may instruct the transmitting device to perform the contention based transmission on the respective at least one of the frequency band, the time period, and the coding space of the at least one selected resource pool, and the selecting means may be adapted to select the indicated number of selected resource pools or less than the indicated number of selected resource pools.

The apparatus may further comprise triggering means adapted to trigger the instructing means to instruct the transmitting device if the first configuration message is received.

The apparatus may further comprise validity learning means adapted to learn, from a received validity indication, a validity duration of the first set; validity checking means adapted to check if the first set is valid; prohibiting means adapted to prohibit the instructing means from instructing the transmitting device based on the at least one selected resource pool if the first set is not valid.

The apparatus may further comprise monitoring means adapted to monitor, if the first set is not valid, if a second configuration message is received, wherein the second configuration message indicates that one or more of the resource pools are comprised in a second set of resource pools, wherein the instructing means may be adapted to instruct the transmitting device based on one or more resource pools of the second set.

The apparatus may further comprise scheme learning means adapted to learn, from a received scheme indication, at least one of a respective modulation scheme and a respective coding scheme for at least one of the resource pools of the first set; scheme determining means adapted to determine the at least one of the respective modulation scheme and the respective coding scheme for at least one of the at least one selected resource pools, wherein the instructing means may be adapted to instruct the transmitting device to use the determined at least one of the respective modulation scheme and the respective coding scheme for transmitting on the at least one selected resource pool.

The selecting means may be adapted to select the at least one selected resource pool based on a respective tag received for one or more of the resource pools of the first set, wherein each of the tags comprises information on at least one of a channel condition of the respective resource pool, a load status of the respective resource pool, and an expected capacity of the respective resource pool.

The apparatus may further comprise at least one of a time learning means and a forbiddance learning means, wherein the time learning means is adapted to learn, from a received time indication, a time duration during which the instructing means may instruct the transmitting device to perform the contention based transmission on the respective at least one of the frequency band, the time period, and the coding space of the at least one selected resource pool; and the forbiddance learning means is adapted to learn that a forbiddance indication is received; and the apparatus may further comprise instruction inhibiting means adapted to inhibit the instructing means from instructing the transmitting device to perform the contention based transmission on the respective at least one of the frequency band, the time period, and the coding space of the at least one selected resource pool when at least one of the time duration is elapsed and the forbiddance indication is received.

According to a third aspect of the invention, there is provided an apparatus, comprising configuration informing circuitry configured to inform on one or more resource pools comprised by a set of resource pools, wherein each of the resource pools comprises respective one or more resource units, and each of the resource units is defined by at least one of a respective frequency band, a respective time period, and a respective coding space, control circuitry configured to control a terminal device such that, if the terminal device wants to perform a contention based transmission, the contention based transmission may be performed on at least one of the resource pools of the set.

The configuration informing circuitry may be configured to inform on the one or more resource pools by broadcasting. The configuration informing circuitry may be configured to inform on the one or more resource pools by dedicated signaling to the terminal device.

The control circuitry may be configured to indicate a number of the resource pools of the set on which the terminal device may perform the contention based transmission if the set of resource pools comprises plural resource pools.

The apparatus may further comprise at least one of time indicating circuitry configured to indicate a time duration during which the terminal device may perform the contention based transmission; validity indicating circuitry configured to indicate a validity duration of the set; and granularity indicating circuitry configured to indicate a respective granularity into which frequency band, the time period, and the coding space is divided.

The apparatus may further comprise deriving circuitry configured to derive, for at least one of the resource pools of the set, at least one of a respective modulation scheme and a respective coding scheme; scheme informing circuitry configured to inform the terminal device on the at least one of the respective modulation scheme and the respective coding scheme for the at least one of the resource pools.

The apparatus may further comprise tag providing circuitry configured to provide, for at least one of the resource pools of the set, a respective tag to the terminal device, wherein each of the tags comprises information on at least one of a channel condition of the respective resource pool, a load status of the respective resource pool, and an expected capacity of the respective resource pool.

The apparatus may further comprise forbidding circuitry configured to forbid the terminal device to perform the contention based transmission on the at least one of the resource pools of the set.

The apparatus may further comprise at least one of evaluating circuitry configured to evaluate the contention based transmission received from the terminal; and scheduling inhibiting circuitry configured to inhibit scheduling of a scheduled transmission on the set of the resource pools.

According to a fourth aspect of the invention, there is provided an apparatus, comprising configuration learning circuitry configured to learn about one or more resource pools comprised by a first set of resource pools based on a received first configuration message, wherein each of the resource pools comprises respective one or more resource units, and each of the resource units is defined by at least one of a respective frequency band, a respective time period, and a respective coding space; selecting circuitry configured to select at least one selected resource pool out of the first set of resource pools based on a received control indication that a contention based transmission may be performed on the at least one selected resource pool; instructing circuitry configured to instruct a transmitting device to perform the contention based transmission on the respective at least one of the frequency band, the time period, and the coding space of the at least one selected resource pool.

The first configuration message may be comprised in a broadcasting signal. The first configuration message may be comprised in a dedicated signaling to the apparatus.

The first set of resource pools may comprise plural resource pools, and the received control indication may indicate a number of the resource pools of the first set for which the instructing circuitry may instruct the transmitting device to perform the contention based transmission on the respective at least one of the frequency band, the time period, and the coding space of the at least one selected resource pool, and the selecting circuitry may be configured to select the indicated number of selected resource pools or less than the indicated number of selected resource pools.

The apparatus may further comprise triggering circuitry configured to trigger the instructing circuitry to instruct the transmitting device if the first configuration message is received.

The apparatus may further comprise validity learning circuitry configured to learn, from a received validity indication, a validity duration of the first set; validity checking circuitry configured to check if the first set is valid; prohibiting circuitry configured to prohibit the instructing circuitry from instructing the transmitting device based on the at least one selected resource pool if the first set is not valid.

The apparatus may further comprise monitoring circuitry configured to monitor, if the first set is not valid, if a second configuration message is received, wherein the second configuration message indicates that one or more of the resource pools are comprised in a second set of resource pools, wherein the instructing circuitry may be configured to instruct the transmitting device based on one or more resource pools of the second set.

The apparatus may further comprise scheme learning circuitry configured to learn, from a received scheme indication, at least one of a respective modulation scheme and a respective coding scheme for at least one of the resource pools of the first set; scheme determining circuitry configured to determine the at least one of the respective modulation scheme and the respective coding scheme for at least one of the at least one selected resource pools, wherein the instructing circuitry may be configured to instruct the transmitting device to use the determined at least one of the respective modulation scheme and the respective coding scheme for transmitting on the at least one selected resource pool.

The selecting circuitry may be configured to select the at least one selected resource pool based on a respective tag received for one or more of the resource pools of the first set, wherein each of the tags comprises information on at least one of a channel condition of the respective resource pool, a load status of the respective resource pool, and an expected capacity of the respective resource pool.

The apparatus may further comprise at least one of a time learning circuitry and a forbiddance learning circuitry, wherein the time learning circuitry is configured to learn, from a received time indication, a time duration during which the instructing circuitry may instruct the transmitting device to perform the contention based transmission on the respective at least one of the frequency band, the time period, and the coding space of the at least one selected resource pool; and the forbiddance learning circuitry is configured to learn that a forbiddance indication is received; and the apparatus may further comprise instruction inhibiting circuitry configured to inhibit the instructing circuitry from instructing the transmitting device to perform the contention based transmission on the respective at least one of the frequency band, the time period, and the coding space of the at least one selected resource pool when at least one of the time duration is elapsed and the forbiddance indication is received.

According to a fifth aspect of the invention, there is provided a method, comprising informing on one or more resource pools comprised by a set of resource pools, wherein each of the resource pools comprises respective one or more resource units, and each of the resource units is defined by at least one of a respective frequency band, a respective time period, and a respective coding space, controlling a terminal device such that, if the terminal device wants to perform a contention based transmission, the contention based transmission may be performed on at least one of the resource pools of the set.

The informing on the one or more resource pools may be performed by broadcasting. The informing on the one or more resource pools may be performed by dedicated signaling to the terminal device.

The method may further comprise indicating a number of the resource pools of the set on which the terminal device may perform the contention based transmission if the set of resource pools comprises plural resource pools.

The method may further comprise at least one of indicating a time duration during which the terminal device may perform the contention based transmission; indicating a validity duration of the set; and indicating a respective granularity into which frequency band, the time period, and the coding space is divided.

The method may further comprise deriving, for at least one of the resource pools of the set, at least one of a respective modulation scheme and a respective coding scheme; informing the terminal device on the at least one of the respective modulation scheme and the respective coding scheme for the at least one of the resource pools.

The method may further comprise providing, for at least one of the resource pools of the set, a respective tag to the terminal device, wherein each of the tags comprises information on at least one of a channel condition of the respective resource pool, a load status of the respective resource pool, and an expected capacity of the respective resource pool.

The method may further comprise forbidding the terminal device to perform the contention based transmission on the at least one of the resource pools of the set.

The method may further comprise at least one of evaluating the contention based transmission received from the terminal; and inhibiting scheduling of a scheduled transmission on the set of the resource pools.

According to a sixth aspect of the invention, there is provided a method, comprising learning about one or more resource pools comprised by a first set of resource pools based on a received first configuration message, wherein each of the resource pools comprises respective one or more resource units, and each of the resource units is defined by at least one of a respective frequency band, a respective time period, and a respective coding space; selecting at least one selected resource pool out of the first set of resource pools based on a received control indication that a contention based transmission may be performed on the at least one selected resource pool; instructing a transmitting device to perform the contention based transmission on the respective at least one of the frequency band, the time period, and the coding space of the at least one selected resource pool.

The first configuration message may be comprised in a broadcasting signal. The first configuration message may be comprised in a dedicated signaling to an apparatus performing the method.

The first set of resource pools may comprise plural resource pools, and the received control indication may indicate a number of the resource pools of the first set for which the transmitting device may be instructed to perform the contention based transmission on the respective at least one of the frequency band, the time period, and the coding space of the at least one selected resource pool, and the indicated number of selected resource pools or less than the indicated number of selected resource pools may be selected.

The method may further comprise triggering to instruct the transmitting device if the first configuration message is received.

The method may further comprise learning, from a received validity indication, a validity duration of the first set; checking if the first set is valid; prohibiting the instructing of the transmitting device based on the at least one selected resource pool if the first set is not valid.

The method may further comprise monitoring, if the first set is not valid, if a second configuration message is received, wherein the second configuration message indicates that one or more of the resource pools are comprised in a second set of resource pools, wherein the transmitting device is instructed based on one or more resource pools of the second set.

The method may further comprise learning, from a received scheme indication, at least one of a respective modulation scheme and a respective coding scheme for at least one of the resource pools of the first set; determining the at least one of the respective modulation scheme and the respective coding scheme for at least one of the at least one selected resource pools, wherein the transmitting device may be instructed to use the determined at least one of the respective modulation scheme and the respective coding scheme for transmitting on the at least one selected resource pool.

The at least one selected resource pool may be selected based on a respective tag received for one or more of the resource pools of the first set, wherein each of the tags comprises information on at least one of a channel condition of the respective resource pool, a load status of the respective resource pool, and an expected capacity of the respective resource pool.

The method may further comprise at least one of learning, from a received time indication, a time duration during which the transmitting device may be instructed to perform the contention based transmission on the respective at least one of the frequency band, the time period, and the coding space of the at least one selected resource pool; and learning that a forbiddance indication is received; and the method may further comprise inhibiting the instructing of the transmitting device to perform the contention based transmission on the respective at least one of the frequency band, the time period, and the coding space of the at least one selected resource pool when at least one of the time duration is elapsed and the forbiddance indication is received.

Each of the methods of the fifth and sixth aspects may be a method of contention based radio resource management.

According to a seventh aspect of the invention, there is provided a computer program product comprising a set of instructions which, when executed on an apparatus, is configured to cause the apparatus to carry out the method according to any of the fifth and sixth aspects. The computer program product may be embodied as a computer-readable medium or directly loadable into a computer.

According to some example embodiments of the invention, at least one of the following technical effects is provided:
- scheduled transmission and contention based transmission may coexist on a same link;
- flexible arrangement of the resources in the air interface;
- network operator maintains control on the resources for contention based transmission;
- overhead is reduced, resulting in an enhanced transmission efficiency in particular for small payloads;
- E2E latency for small payload is reduced.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of example embodiments of the present invention which is to be taken in conjunction with the appended drawings, wherein
Fig. 1 shows a resource grid according to an example embodiment of the invention;
Fig. 2 shows a system according to an example embodiment of the invention;
Fig. 3 shows a system according to an example embodiment of the invention;
Fig. 4 shows an apparatus according to an example embodiment of the invention;
Fig. 5 shows a method according to an example embodiment of the invention;
Fig. 6 shows an apparatus according to an example embodiment of the invention;
Fig. 7 shows a method according to an example embodiment of the invention; and
Fig. 8 shows an apparatus according to an example embodiment of the invention.

### Detailed description of certain example embodiments

Herein below, certain example embodiments of the present invention are described in detail with reference to the accompanying drawings, wherein the features of the example embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

According to some embodiments of the invention, small packet-oriented contention based transmission, corresponding radio resource management method and controlling options are outlined. To facilitate the contention-based scheme, some specific design on the resource management and network assistance mechanism are also elaborated. Hence, air interface structure, control procedure and radio resource management options for contention based access are disclosed.

Some embodiments of the invention are related to UP contention based transmission. Details are described further below. However, the invention is not limited thereto. Embodiments of the invention may be employed where the contention based transmission is used in D2D communication.

According to some embodiments of the invention, the procedures between network and UE are different from those proposed in the cited prior art.

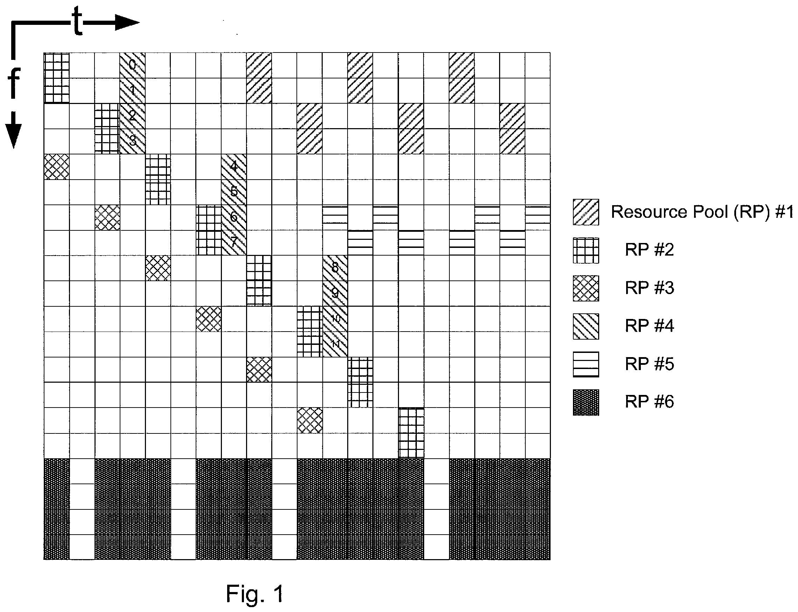

According to some embodiments of the invention, the air interface is arranged as a resource grid. An example of such a resource grid is shown in Fig. 1. Fig. 1 shows how the air interface is divided into a number of time slots (horizontal axis) and frequency bands (vertical axis). Each square in the resource grid is a RU. RUs of the same texture pattern belong to a same resource pool (RP). Each RU belongs to either only one RP or to no RP. In the Example of Fig. 1, the network (eNB) assigns the patterned RPs to contention based transmission, whereas the non-patterned RUs are used for scheduled transmission and random access transmission. Accordingly, a scheduling inhibiting means in the eNB may inhibit scheduling of a scheduled transmission on a RU belonging to a RP assigned to contention based transmission.

From a UE's PHY layer of view, usable resources for contention based access are defined on a resource pool (RP) level, which consists of one or more resource units (RU) multiplexed in time domain and/or frequency domain and/or even code domain (not shown in Fig. 1).

If a certain dimension (time, frequency, code) is not indicated for a resource grid, it may mean that the corresponding domain may be fully used for contention based access. In the example of Fig. 1, any code may be used in each RU foreseen for contention based transmission.

The smallest RU granularity may be smaller than 1 ms (time) or 180 kHz (frequency). In general, the time granularity may be X seconds and the frequency granularity Y Hz, where X and Y can take different values in line with the air interface structure. E.g. for LTE, examples may be X=1ms (corresponding to the TTI size) and Y= multiple PRBs of 180 kHz. For 5G, values of X and Y might be different, e.g. X=0.2 ms to reflect shorter TTI size.

The smallest granularity for each RU in RP may be configurable. eNB may inform on the granularity by a granularity indicating means. Example granularities are:
o Time domain: [0.2, 0.25, 0.5, 1] ms
o Frequency domain: [90, 180, 360, 1080] kHz.

For OFDM/SC-FDMA waveform, the minimum granularity in frequency domain may be a plurality of subcarriers. For other multicarrier waveforms, e.g. filter bank multi-carrier or zerotail OFDM, the minimum granularity in frequency domain could be one or a plurality of filtered single carriers.

eNB configures UEs with one or more RPs. Each UE may be configured with one or multiple RPs. Thus, from network's (eNB's) point of view, the number and size of RPs and RUs can be arranged considering traffic load/type, QoS requirement, etc. On eNB's side, a configuration informing means may inform UE on the RPs. On UE's side, a configuration learning means may learn about the RPs from the eNB.

Each RP may support hierarchical granularities. For example, a UE may optionally use {1, 2, 4} RU(s) for one transmission block transmission. The symbol {a, b} means "either a or b". The RU(s) which are used for one transmission block transmission may be named resource group (RG). Each RU may be part of one of more resource groups (RG). In the example, the size of a RG may be {1,2,4} RU(s), but the size is not limited to these values. In the example shown in Figure 1, the RP #4 possesses 12 RUs. RU#0 may be part of RGs including e.g.

<RU#0>, <RU#0 and RU#1>, and <RU#0, RU#1, RU#2 and RU#3>. The symbol <a, b> defines that the group "consists of a and b". Supported options of sizes of RGs may be configurable by the network and may be part of resource pool configuration parameters.

Resource pools may be narrow band (considering low cost and Frequency selective gain) or wide band (frequency diversity) to support different scenarios. For example,
- RP #1, 5 and 6 are examples of narrow band resource pool, and
- RP #2, 3 and 4 are examples of wide band resource pool.

Narrow band (Localized) RP can benefit from frequency selective access. UL Measurement based on RP/RU pattern can be helpful for both scheduling and contention-based transmission. For UL transmission, narrow-band RP keeps UL resource from being fragmented and maintains single carrier property.

Wide band (Distributed) RP can help to achieve frequency diversity gain. UL Measurement based on RU pattern can help to choose RU within a RP in contention-based transmission.

For cell-specific/common resource pool(s), configuration may be transmitted in SIB. For UE-specific resource pool(s), configuration may be transmitted by RRC signalling or PHY layer signalling. Resource pool configuration may also be indicated via a DL control channel, in which case one index to indicate one of already configured or fixed configuration sets can be used.

To address different UE capabilities, the RUs within one RP may either be discontinuous or continuous in time domain. If frequency location changes RU by RU, some low complexity UE (i.e. UEs equipped with a single oscillator) may need some time gap for re-tuning if multiple RUs are selected for transmission.

For UL contention-based transmission control/triggering, the eNB sends an UL grant to the UE that indicates which RP it is allowed to use for contention based access. For this, eNB may comprise a control means, and UE may correspondingly comprise a selecting means. UL grant may act as a trigger, i.e. UE may not perform contention-based transmission without having received the grant and may perform contention-based transmission after receipt of grant. In the UE, the triggering may be performed by a triggering means. Therefore, contention can be limited within for one specific grant, in that not more than a predefined number of UEs receive a grant according to which a certain RP may be used for contention based transmission. The predefined number may depend on the number of RUs in the RP and/or their granularity.

The grant may include an indication how long contention based transmission on the indicated RP is allowed (validity time). The validity time may be indicated in number of periods or time duration. To inform on the validity time, eNB may use a time indication means. On UE's side, a time learning means may learn the validity time, and an inhibiting means may inhibit contention based communication on the respective RP after the validity time has elapsed.

If permitted by the network (could be signaled e.g. in SIB or RRC signaling), UE may choose RP/RU by itself within a set of RPs. In this case, an UL grant is not needed. I.e., UE performs contention-based transmission regardless of a received grant.

The network may provide some network assistance information to the UE for the UE better choosing suitable RP/RU. For example, the network may provide for each of a group of RPs (the group may comprise all of the RPs configured for contention-based transmission of the UE or a subset thereof) a tag reflecting at least one of a channel condition (interference level), a load status or even a capacity. The assistance information may be used by UE to select most suitable RP, based on e.g. application/traffic requirements such as latency, data rate, etc.. On eNB's side, the tag may be provided by a tag providing means, and on UE's side, the tag may be evaluated by the selecting means.

In addition to or alternatively to the validity time indication, physical downlink control signaling may be used by the network (e.g. by a forbidding means) to terminate the contention-based communication. After termination of the contention-based communication, the UE is subject to scheduled access only. This may be achieved by a forbiddance learning means and an inhibiting means.

The UE identity or address may be attached or masked in the CRC in PHY layer TB or attached in the MAC layer head or even application layer packet if neither control header nor preamble is transmitted before data.

In some embodiments of the invention, each RP may correlated to a specific MCS level. eNB may derive the MCS level by a deriving means and inform the UE by a scheme informing means. Correspondingly, the UE may learn the MCS level by a scheme learning means and, based on the information learned by the scheme learning means, determine it for the RP selected for contention based transmission. I.e., a UE transmitting on the RP uses the specified MCS level. In this way, once a certain UE selects one RP, the MCS is selected automatically. The network may configure the MCS for each RP via RRC signalling, SIB or PHY control channel.

In some embodiments of the invention, SIB provides additional information facilitating small packet contention-based transceiving. The additional information may comprise at least one of the following:
- An indication whether small packet-oriented air interface and operation is supported in the network, i.e. whether the cells belongs to an embodiment of the invention;
- If small packet transceiving oriented operation is supported, certain common RP(s) may be optionally configured in SIB;
- RP configuration may be adaptive to traffic status. In this case, UE may read SIB again and update within certain period if necessary. Hence the update rate or period may be signaled via SIB, e.g. by a validity indicating means, and may be received at the UE by a validity learning means. The UE may then check, e.g. by a validity checking means, if the configuration (set of RPs) is still valid and, if not, prohibit (e.g. by a prohibiting means) contention based transmission on the configuration. In addition, a monitoring means in UE may monitor if a new (updated) configuration is received from eNB. In this way some overhead of paging message can be saved.
- Each of the common RPs may also be indicated with a tag reflecting at least one of channel condition, load status and even capacity. The tag may be used by UE to select most suitable RP based on e.g. application/traffic requirements, such as latency, data rate, etc.

SIB related enhancement may also facilitate UL contention-based transmission for UEs in idle mode. UEs in idle mode do not have an RRC connection. Thus, they may not acquire UE-specific RP configurations. However, UEs in idle mode may read the RP configuration(s) in SIB. Thus, they may get access to one or more common RPs for contention based transmission. Thus, UEs in both idle mode and connected mode may benefit from providing an RP configuration in SIB.

If an UE in idle mode reads the RP configuration in SIB and, therefore, acquires knowledge of the RPs for UL contention based access in the cell, the UE may immediately start UL contention based access after transition to connected mode. Thus, some latency and control signaling overhead is saved.

The RP related configuration may also be configured via RRC signalling or a new physical channel instead of SIB.

UL contention-based transmission solution according to some embodiments of the invention is capable for operating a network supporting UL contention-based small packet transmission. Resource management and controlling framework may accommodate various requirement and scenarios in terms of transmission efficiency, latency and/or accessing capability. By employing proper network controlling level and choosing parameters for resource configuration (e.g. resource amount, granularity, etc), network may flexibly support application scenarios requiring different QoS and capacity.

Conventional UL resource allocation and MCS selection mainly rely on SRS measurement and scheduling implementation at eNB side. However, for UL autonomous contention based transmission, interference measurement done by UE is not reliable any more without any assistance from network, since the estimated interference mostly distorts the actual one experienced by eNB's receiver.

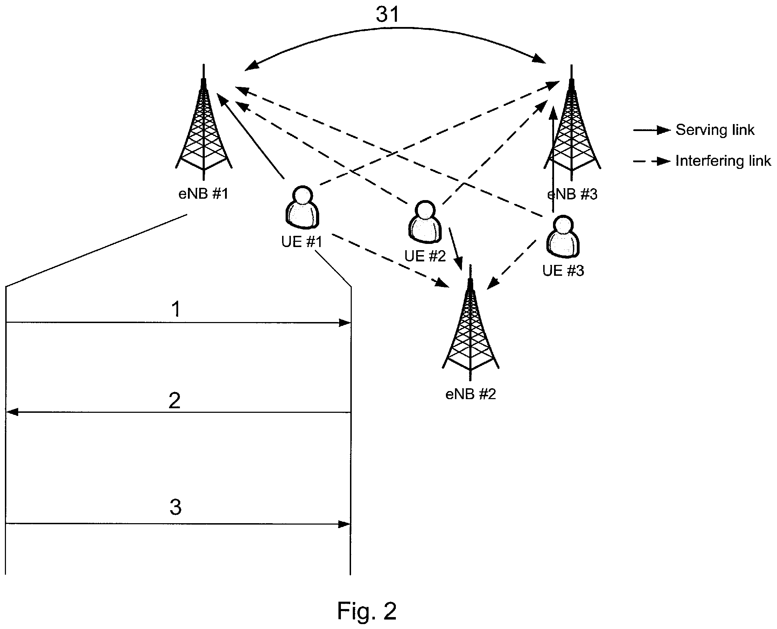

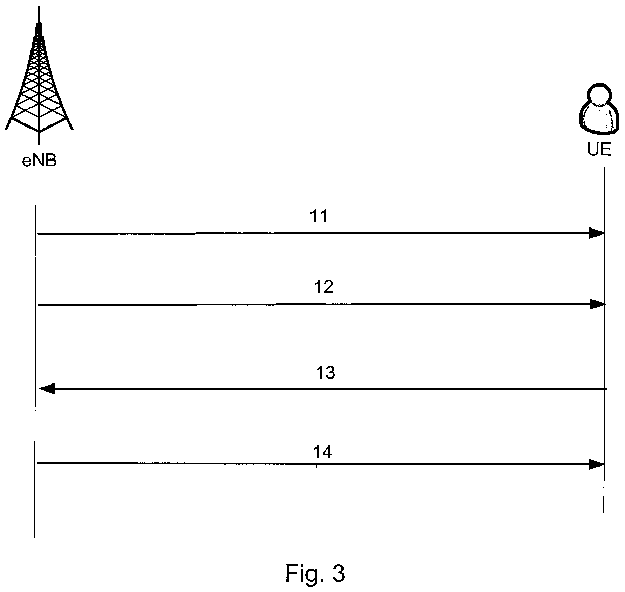

To overcome the above issue, some embodiments of the invention provide some network assistance together with the procedure of RP related configuration. Figs. 2 and 3 give two examples. In these examples, eNB #1 is assumed to be capable of rough channel estimation and interference measurement for each RP. Some coordination between cells/eNBs (31) could also be employed to help improve the interference estimation accuracy. For this reason, Fig. 2 shows in addition to eNB #1 and UE #1 performing respective methods of the invention some other eNBs (eNBs #2 and #3) and some other UEs (UE #2 and #3) with their serving links (arrows with solid lines) and interfering links (arrows with dashed lines). However, the other eNBs and UEs need not to be present, or another number of each of them may be present.

An example implementation according to some embodiments of the invention, as shown in Fig. 2, is as follows:
Step 1: eNB #1 indicates MCS level for each configured RP via RRC signalling, SIB or PHY control channel. RP configuration includes but is not limited to:
   - RU physical granularity in time/frequency/code domain;
   - Supported RG size for one TB transmission, which could be one RU or multiple;
   - Overall usable resource location boundary/bitmapping in time/frequency/code domain;
   - RP/RG/RU pattern related parameters, e.g. in Fig. 1, frequency domain offset between adjacent RUs, which could be 0, 2, 4, or switching between {-1, 1} or {-2, 2}. The supported RG could be 1, 2, 4 RUs.
   - Power control related parameters;
   - Validity period or update rate related parameters.
   - Each common RP may also be indicated with a tag reflecting channel condition (interference level), load status and/or even capacity, which is used by UE to select most suitable RP(s) based on application/traffic requirements, such as latency, data rate, QoS, etc.
Step 2: UE #1 conducts contention-based transmission by choosing RP/RG/RU and MCS considering some or all of the above network assistance information, such as interference level per RP and the tag reflecting channel condition, load status and/or even expected capacity. Monitoring power fluctuation of neighbouring cell UEs (e.g. UE #2, UE #3) may also be considered.
   HARQ and Ack/Nack details are not elaborated in this embodiment.
Step 3: eNB #1 may further update the RP related information especially the interference level, channel condition, load status, and/or capacity. The decision could be made based on the contention-based communication performance, new application arrival, or capacity changing, etc. The updates may be periodic and/or they may be event-triggered.
   For the case of contention based access triggered by using DL PHY control signalling, Fig. 3 gives an example according to an embodiment of the invention. In Fig. 3, other eNBs and UEs than those performing methods according to an embodiment of the invention are not shown but may be present correspondingly to eNBs #2 and #3 and UEs #2 and #3 shown in Fig. 2. The eNB may send an UL grant to the UE that indicates which RP is allowed to use for contention based access. UL grant acts as a trigger. Therefore, eNB may limit contention in a certain RP for one specific grant. Valid number of periods or time duration related parameter(s) may also be included.
Step 11: RP related configurations are sent to UE via RRC signalling or SIB.
Step 12: PHY control signalling is used to indicate which RP(s) is/are allowed for contention-based transmission. This grant acts as a triggering.
Step 13: UE starts to transmit in a contention way on the indicated RP(s).
Step 14: eNB may disable or terminate the contention-based transmission via PHY control signalling. In addition, eNB may indicate that the RP(s) is/are here-after scheduled for UL transmission.

The UL grant of Fig. 3 may comprise a single RP. In this case, contention based transmission will be performed on the single RP. If the UL grant according to Fig. 3 comprises plural RPs, UE may use all of them (i.e. a combination of them) for the contention based transmission.

It is noted that, in some embodiments of the invention, the above mentioned PHY control signalling may be substituted with RRC signalling.

A main difference between the embodiments of Figs. 2 and 3 is that, according to Fig. 2, the UE may select one or more RPs out of the configured RPs, whereas, according to Fig. 3, the UE may transmit on the triggered RP(s) without having any choice. Accordingly, the UE of Fig. 3 does not need network assistance information as discussed with respect to Fig. 2.

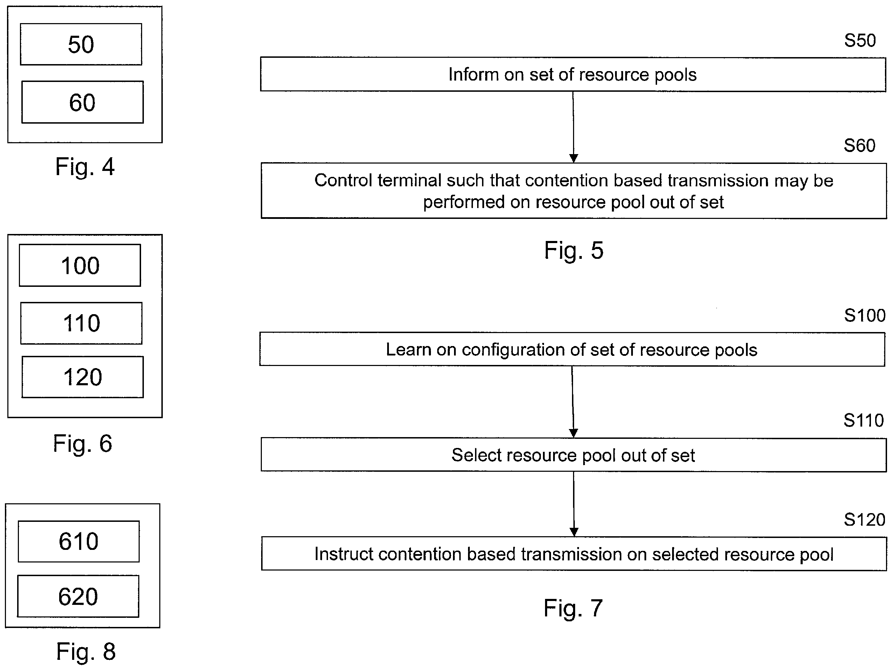

Fig. 4 shows an apparatus according to an example embodiment of the invention. The apparatus may be a base station such as a NodeB or eNodeB or an element thereof. Fig. 5 shows a method according to an example embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises configuration informing means 50 and control means 60. The configuration informing means 50 and control means 60 may be a configuration informing circuitry and a control circuitry, respectively.

The configuration informing means 50 inform on one or more resource pools comprised by a set of resource pools (S50). Each of the resource pools comprises respective one or more resource units, and each of the resource units is defined by at least one of a respective frequency band, a respective time period, and a respective coding space.

The control means 60 controls a terminal device (e.g. a UE) such that, if the terminal device wants to perform a contention based transmission, the contention based transmission may be performed on at least one of the resource pools of the set (S60). I.e., the control means allows the terminal device to perform contention based transmission on at least one of the resource pools of the set.

In some embodiments of the invention, such as the one shown in Fig. 2, the informing by the configuration informing means 50 includes the allowing by the allowing means. In these embodiments, the configuration informing means 50 and the allowing means 60 may be a same means.

In some embodiments of the invention, such as the one shown in Fig. 3, the allowing by the allowing means 60 comprises triggering the contention based transmission.

Fig. 6 shows an apparatus according to an example embodiment of the invention. The apparatus may be a terminal such as a UE or an element thereof. Fig. 7 shows a method according to an example embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises configuration learning means 100, selecting means 110, and instructing means 120. The learning means 100, selecting means 110, and instructing means 120 may be a learning circuitry, selecting circuitry, and instructing circuitry, respectively.

The configuration learning means 100 learns about one or more resource pools comprised by a set of resource pools based on a received configuration message (S100). Each of the resource pools comprises respective one or more resource units, and each of the resource units is defined by at least one of a respective frequency band, a respective time period, and a respective coding space.

The selecting means 110 selects at least one selected resource pool out of the set of resource pools based on a received allowance indication (S110). The allowance indication indicates that a contention based transmission on the at least one selected resource pool is allowed.

In some embodiments of the invention, such as the one of Fig. 2, the receiving the configuration message implies the allowance indication for performing the contention based transmission on the set of resource pools.

In some embodiments of the invention, such as the one of Fig. 3, the allowance indication may also be considered as a trigger triggering the contention based transmission on the indicated resource pool. In this case, the selecting means 110 "selects" the resource pool(s) indicated in the allowance indication.

The instructing means 120 instructs a transmitting device to perform the contention based transmission on the respective at least one of the frequency band, the time period, and the coding space of the at least one selected resource pool (S120). The transmitting means may be a transceiver, e.g. a transceiver of the terminal (UE) comprising the apparatus. The transmitting means need not to be aware of the resource grid formed by the resource units.

Fig. 8 shows an apparatus according to an example embodiment of the invention. The apparatus comprises at least one processor 610, at least one memory 620 including computer program code, and the at least one processor 610, with the at least one memory 620 and the computer program code, being arranged to cause the apparatus to at least perform at least one of the methods according to Figs. 5 and 7 and related description.

Embodiments of the invention are particularly useful for transmission of small packets. However, some embodiments of the invention may be deployed for transmission of larger packets, too.

Embodiments of the invention may be employed for contention based uplink (from terminal to base station) transmission. In this case, an evaluating means in the eNB may evaluate contention based transmission received from the UE on the RP. However, some embodiments of the invention may be deployed for D2D communication such as V2V or V2X.

A terminal may be any kind of terminal which may be connected to the respective network, such as a UE, a laptop, a smartphone, a mobile phone, a terminal of a machine type communication etc.

One piece of information may be transmitted in one or plural messages from one entity to another entity. Each of these messages may comprise further (different) pieces of information.

Names of network elements, protocols, and methods are based on current standards. In other versions or other technologies, the names of these network elements and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software.

Some example embodiments of the invention may be applied to a 3GPP network (e.g. LTE, LTE-A, or a 5G network), as described hereinabove. However, some example embodiments of the invention may be applied to any kind of network wherein both scheduled communication and contention based communication may be performed, including mobile networks and fixed networks.

According to the above description, it should thus be apparent that example embodiments of the present invention provide, for example a base station such as a NodeB or eNodeB, or a component thereof (such as a model manger), an apparatus embodying the same, a method for controlling and/or operating the same, and computer program(s) controlling and/or operating the same as well as mediums carrying such computer program(s) and forming computer program product(s). Furthermore, it should thus be apparent that example embodiments of the present invention provide, for example a terminal such as a UE, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques, means, entities, units, devices, or methods include, as non-limiting examples, implementations as hardware, software, firmware, special purpose circuits or logic, general purpose hardware or controller or other computing devices, a virtual machine, or some combination thereof.

It should be noted that the description of the embodiments is given by way of example only and that various modifications may be made without departing from the scope of the invention as defined by the appended claims.

## Claims

1. An apparatus, comprising
configuration informing means (50) adapted to inform a terminal device on one or more resource pools (S50) comprised by a set of resource pools, wherein each of the resource pools comprises respective one or more resource units, and each of the resource units is defined by at least one of a respective frequency band, a respective time period, and a respective coding space, control means (60) adapted to control the terminal device such that, when the terminal device wants to perform a contention based transmission (S60), the contention based transmission may be performed on at least one of the resource pools of the set, and
tag providing means adapted to provide, for at least one of the resource pools of the set, a respective tag to the terminal device, wherein each of the tags comprises information on at least one of a channel condition of the respective resource pool, a load status of the respective resource pool, and an expected capacity of the respective resource pool.

2. The apparatus according to claim 1, wherein at least one of
the configuration informing means (50) is adapted to inform on the one or more resource pools by broadcasting, and
the configuration informing means (50) is adapted to inform on the one or more resource pools by dedicated signaling to the terminal device.

3. The apparatus according to any of claims 1 and 2, wherein
the control means (60) is adapted to indicate a number of the resource pools of the set on which the terminal device may perform the contention based transmission when the set of resource pools comprises plural resource pools.

4. The apparatus according to any of claims 1 to 3, further comprising at least one of
time indicating means adapted to indicate a time duration during which the terminal device may perform the contention based transmission;
validity indicating means adapted to indicate a validity duration of the set; and
granularity indicating means adapted to indicate a respective granularity into which the frequency band, the time period, and the coding space is divided.

5. The apparatus according to any of claims 1 to 4, further comprising
deriving means adapted to derive, for at least one of the resource pools of the set, at least one of a respective modulation scheme and a respective coding scheme;
scheme informing means adapted to inform the terminal device on the at least one of the respective modulation scheme and the respective coding scheme for the at least one of the resource pools.

6. An apparatus, implemented as a terminal device, comprising
configuration learning means (100) adapted to learn about one or more resource pools comprised by a first set of resource pools based on a first configuration message received from another apparatus (S100), wherein each of the resource pools comprises respective one or more resource units, and each of the resource units is defined by at least one of a respective frequency band, a respective time period, and a respective coding space;
selecting means (110) adapted to select at least one resource pool out of the one or more resource pools based on a control indication received from the other apparatus (S110) that a contention based transmission may be performed on the at least one selected resource pool;
instructing means (120) adapted to instruct a transmitting device to perform the contention based transmission on the respective at least one of the frequency band, the time period, and the coding space of the at least one selected resource pool (S120), wherein the selecting means are further adapted to select the at least one selected resource pool based on a respective tag received for one or more of the resource pools of the first set, wherein each of the tags comprises information on at least one of a channel condition of the respective resource pool, a load status of the respective resource pool, and an expected capacity of the respective resource pool.

7. The apparatus according to claim 6, wherein at least one of
the first configuration message is comprised in a broadcasting signal, and
the first configuration message is comprised in a dedicated signaling to the apparatus.

8. The apparatus according to any of claims 6 and 7, wherein
the first set of resource pools comprises plural resource pools, and
the received control indication indicates a number of the resource pools of the first set for which the instructing means may instruct the transmitting device to perform the contention based transmission on the respective at least one of the frequency band, the time period, and the coding space of the at least one selected resource pool, and
the selecting means is adapted to select the indicated number of resource pools or less than the indicated number of resource pools.

9. The apparatus according to any of claims 6 and 7, further comprising
triggering means adapted to trigger the instructing means to instruct the transmitting device if the first configuration message is received.

10. The apparatus according to any of claims 6 to 9, further comprising
validity learning means adapted to learn, from a received validity indication, a validity duration of the first set;
validity checking means adapted to check if the first set is valid;
prohibiting means adapted to prohibit the instructing means from instructing the transmitting device based on the at least one selected resource pool if the first set is not valid.

11. The apparatus according to claim 10, further comprising
monitoring means adapted to monitor, if the first set is not valid, if a second configuration message is received, wherein the second configuration message indicates that one or more of the resource pools are comprised in a second set of resource pools, wherein
the instructing means is adapted to instruct the transmitting device based on one or more resource pools of the second set.

12. The apparatus according to any of claims 6 to 11, further comprising
scheme learning means adapted to learn, from a received scheme indication, at least one of a respective modulation scheme and a respective coding scheme for at least one of the resource pools of the first set;
scheme determining means adapted to determine the at least one of the respective modulation scheme and the respective coding scheme for at least one of the at least one selected resource pools, wherein
the instructing means is adapted to instruct the transmitting device to use the determined at least one of the respective modulation scheme and the respective coding scheme for transmitting on the at least one selected resource pool.

13. Method performed by an apparatus, comprising
informing (S50) a terminal device on one or more resource pools comprised by a set of resource pools,
wherein each of the resource pools comprises respective one or more resource units, and each of the resource units is defined by at least one of a respective frequency band, a respective time period, and a respective coding space,
controlling (S60) the terminal device such that, when the terminal device wants to perform a contention based transmission, the contention based transmission may be performed on at least one of the resource pools of the set, and
providing, for at least one of the resource pools of the set, a respective tag to the terminal device, wherein each of the tags comprises information on at least one of a channel condition of the respective resource pool, a load status of the respective resource pool, and an expected capacity of the respective resource pool.

14. Method performed by an apparatus implemented as a terminal device, comprising
learning (S100) about one or more resource pools comprised by a first set of resource pools based on a first configuration message received from another apparatus, wherein each of the resource pools comprises respective one or more resource units, and each of the resource units is defined by at least one of a respective frequency band, a respective time period, and a respective coding space;
selecting (S110) at least one resource pool out of the one or more resource pools based on a control indication received from the other apparatus that a contention based transmission may be performed on the at least one selected resource pool and on a respective tag received for one or more of the resource pools of the first set, wherein each of the tags comprises information on at least one of a channel condition of the respective resource pool, a load status of the respective resource pool, and an expected capacity of the respective resource pool;
instructing (S120) a transmitting device to perform the contention based transmission on the respective at least one of the frequency band, the time period, and the coding space of the at least one selected resource pool.

15. A computer program product comprising a set of instructions which, when executed on an apparatus, is configured to cause the apparatus to carry out the method according to any of claims 13 and 14.

## Patentansprüche

1. Einrichtung, die Folgendes umfasst
ein Auslegungsinformationsmittel (50), das angepasst ist, eine Endgerätevorrichtung über ein oder mehrere Ressourcenpools (S50), die in einem Satz von Ressourcenpools umfasst sind, zu informieren, wobei jeder der Ressourcenpools eine oder mehrere jeweilige Ressourceneinheiten umfasst und jede der Ressourceneinheiten durch mindestens eines von einem jeweiligen Frequenzband, einer jeweiligen Zeitperiode und einem jeweiligen Codierraum definiert ist,
ein Steuermittel (60), das angepasst ist, die Endgerätevorrichtung derart zu steuern, dass, wenn die Endgerätevorrichtung eine konfliktbasierte Übertragung (S60) durchführen will, die konfliktbasierte Übertragung in mindestens einem der Ressourcenpools des Satzes durchgeführt werden kann, und
ein Tagbereitstellungsmittel, das angepasst ist, der Endgerätevorrichtung für mindestens einen der Ressourcenpools des Satzes ein jeweiliges Tag bereitzustellen, wobei jedes der Tags Informationen über mindestens eines von einem Kanalzustand des jeweiligen Ressourcenpools, eines Laststatus des jeweiligen Ressourcenpools und einer erwarteten Kapazität des jeweiligen Ressourcenpools umfasst.

2. Einrichtung nach Anspruch 1, wobei mindestens eines von Folgendem gilt
das Auslegungsinformationsmittel (50) ist angepasst, durch Broadcasting über den einen oder die mehreren Ressourcenpools zu informieren, und
das Auslegungsinformationsmittel (50) ist angepasst, durch eine dedizierte Signalisierung an die Endgerätevorrichtung über den einen oder die mehreren Ressourcenpools zu informieren.

3. Einrichtung nach einem der Ansprüche 1 und 2, wobei das Steuermittel (60) angepasst ist, eine Anzahl der Ressourcenpools des Satzes, in denen die Endgerätevorrichtung die konfliktbasierte Übertragung durchführen kann, anzuzeigen, wenn der Satz von Ressourcenpools mehrere Ressourcenpools umfasst.

4. Einrichtung nach einem der Ansprüche 1 bis 3, die ferner mindestens eines von Folgendem umfasst
ein Zeitanzeigemittel, das angepasst ist, eine Zeitdauer, während der die Endgerätevorrichtung die konfliktbasierte Übertragung durchführen kann, anzuzeigen;
ein Gültigkeitsanzeigemittel, das angepasst ist, eine Gültigkeitsdauer des Satzes anzuzeigen; und
ein Granularitätsanzeigemittel, das angepasst ist, eine jeweilige Granularität, in die das Frequenzband, die Zeitperiode und der Codierraum geteilt sind, anzuzeigen.

5. Einrichtung nach einem der Ansprüche 1 bis 4, die ferner Folgendes umfasst
ein Ableitungsmittel, das angepasst ist, für mindestens einen der Ressourcenpools des Satzes mindestens eines von einem jeweiligen Modulationsschema und einem jeweiligen Codierschema abzuleiten;
ein Schemeninformationsmittel, das angepasst ist, die Endgerätevorrichtung über das mindestens eine des jeweiligen Modulationsschemas und des jeweiligen Codierschemas für den mindestens einen der Ressourcenpools zu informieren.

6. Einrichtung, die als eine Endgerätevorrichtung implementiert ist und Folgendes umfasst
ein Auslegungserfahrungsmittel (100), das angepasst ist, auf Basis einer ersten Auslegungsnachricht, die von einer anderen Einrichtung (S100) empfangen wird, von einem oder mehreren Ressourcenpools, die in einem ersten Satz von Ressourcenpools umfasst sind, zu erfahren, wobei jeder der Ressourcenpools eine oder mehrere jeweilige Ressourceneinheiten umfasst und jede der Ressourceneinheiten durch mindestens eines von einem jeweiligen Frequenzband, einer jeweiligen Zeitperiode und einem jeweiligen Codierraum definiert ist;
ein Auswahlmittel (110), das angepasst ist, auf Basis einer Steueranzeige, die von der anderen Vorrichtung (S110) empfangen wird, dass eine konfliktbasierte Übertragung in dem mindestens einen ausgewählten Ressourcenpool durchgeführt werden kann, mindestens einen Ressourcenpool aus dem einen oder den mehreren Ressourcenpools auszuwählen;
ein Anweisungsmittel (120), das angepasst ist, eine Übertragungsvorrichtung anzuweisen, die konfliktbasierte Übertragung im jeweiligen mindestens einen des Frequenzbands, der Zeitperiode und des Codierraums des mindestens einen ausgewählten Ressourcenpools (S120) durchzuführen, wobei das Auswahlmittel ferner angepasst ist, den mindestens einen ausgewählten Ressourcenpool auf Basis eines jeweiligen Tags, das von dem einen oder den mehreren der Ressourcenpools des ersten Satzes empfangen wird, auszuwählen, wobei jedes der Tags Informationen über mindestens eines von einem Kanalzustand des jeweiligen Ressourcenpools, eines Laststatus des jeweiligen Ressourcenpools und einer erwarteten Kapazität des jeweiligen Ressourcenpools umfasst.

7. Einrichtung nach Anspruch 6, wobei mindestens eines von Folgendem gilt
die erste Auslegungsnachricht ist in einem Broadcastingsignal umfasst, und
die erste Auslegungsnachricht ist in einer dedizierten Signalisierung an die Einrichtung umfasst.

8. Einrichtung nach einem der Ansprüche 6 und 7, wobei der erste Satz von Ressourcenpools mehrere Ressourcenpools umfasst, und
die empfangene Steueranzeige eine Anzahl der Ressourcenpools des ersten Satzes anzeigt, für die das Anweisungsmittel die Übertragungsvorrichtung anweisen kann, die konfliktbasierte Übertragung im jeweiligen mindestens einen des Frequenzbands, der Zeitperiode und des Codierraums des mindestens einen ausgewählten Ressourcenpools durchzuführen, und
das Auswahlmittel angepasst ist, die angezeigte Anzahl von Ressourcenpools oder weniger als die angezeigte Anzahl von Ressourcenpools auszuwählen.

9. Einrichtung nach einem der Ansprüche 6 und 7, die ferner Folgendes umfasst
ein Auslösemittel, das angepasst ist, das Anweisungsmittel zum Anweisen der Übertragungsvorrichtung auszulösen, wenn die erste Auslegungsnachricht empfangen wird.

10. Einrichtung nach einem der Ansprüche 6 bis 9, die ferner Folgendes umfasst
ein Gültigkeitserfahrungsmittel, das angepasst ist, aus einer empfangenen Gültigkeitsanzeige eine Gültigkeitsdauer des ersten Satzes zu erfahren;
ein Gültigkeitsprüfmittel, das angepasst ist zu prüfen, ob der erste Satz gültig ist;
ein Verbietungsmittel, das angepasst ist, es dem Anweisungsmittel zu verbieten, die Übertragungsvorrichtung auf Basis des mindestens einen ausgewählten Ressourcenpools anzuweisen, wenn der erste Satz nicht gültig ist.

11. Einrichtung nach Anspruch 10, die ferner Folgendes umfasst
ein Überwachungsmittel, das angepasst ist, wenn der erste Satz nicht gültig ist, zu überwachen, ob eine zweite Auslegungsnachricht empfangen wird, wobei die zweite Auslegungsnachricht anzeigt, dass ein oder mehrere der Ressourcenpools in einem zweiten Satz von Ressourcenpools umfasst sind, wobei
das Anweisungsmittel angepasst ist, die Übertragungsvorrichtung auf Basis von einem oder mehreren Ressourcenpools des zweiten Satzes anzuweisen.

12. Einrichtung nach einem der Ansprüche 6 bis 11, die ferner Folgendes umfasst
ein Schemenerfahrungsmittel, das angepasst ist, aus einer empfangenen Schemenanzeige mindestens eines von einem jeweiligen Modulationsschema und einem jeweiligen Codierschema für mindestens einen der Ressourcenpools des ersten Satzes zu erfahren;
ein Schemenbestimmungsmittel, das angepasst ist, das mindestens eine des jeweiligen Modulationsschemas und des jeweiligen Codierschemas für mindestens einen des mindestens einen ausgewählten Ressourcenpools zu bestimmen, wobei
das Anweisungsmittel angepasst ist, die Übertragungsvorrichtung anzuweisen, das bestimmte mindestens eine des jeweiligen Modulationsschemas und des jeweiligen Codierschemas zum Übertragen in dem mindestens einen ausgewählten Ressourcenpool zu verwenden.

13. Verfahren, das von einer Einrichtung durchgeführt wird und Folgendes umfasst
Informieren (S50) einer Endgerätevorrichtung über einen oder mehrere Ressourcenpools, die in einem Satz von Ressourcenpools umfasst sind, wobei jeder der Ressourcenpools eine oder mehrere jeweilige Ressourceneinheiten umfasst und jede der Ressourceneinheiten durch mindestens eines von einem jeweiligen Frequenzband, einer jeweiligen Zeitperiode und einem jeweiligen Codierraum definiert ist,
Steuern (S60) der Endgerätevorrichtung derart, dass, wenn die Endgerätevorrichtung eine konfliktbasierte Übertragung durchführen will, die konfliktbasierte Übertragung in mindestens einem der Ressourcenpools des Satzes durchgeführt werden kann, und
Bereitstellen eines jeweiligen Tags für mindestens einen der Ressourcenpools des Satzes für die Endgerätevorrichtung, wobei jedes der Tags Informationen über mindestens eines von einem Kanalzustand des jeweiligen Ressourcenpools, eines Laststatus des jeweiligen Ressourcenpools und einer erwarteten Kapazität des jeweiligen Ressourcenpools umfasst.

14. Verfahren, das von einer Einrichtung durchgeführt wird, die als eine Endgerätevorrichtung implementiert ist, und Folgendes umfasst
Erfahren (S100) von einem oder mehreren Ressourcenpools, die in einem ersten Satz von Ressourcenpools umfasst sind, auf Basis einer ersten Auslegungsnachricht, die von einer anderen Einrichtung empfangen wird, wobei jeder der Ressourcenpools eine oder mehrere jeweilige Ressourceneinheiten umfasst und jede der Ressourceneinheiten durch mindestens eines von einem jeweiligen Frequenzband, einer jeweiligen Zeitperiode und einem jeweiligen Codierraum definiert ist;
Auswählen (S110) von mindestens einem Ressourcenpool aus dem einen oder den mehreren Ressourcenpools auf Basis einer Steueranzeige, die von der anderen Einrichtung empfangen wird, dass eine konfliktbasierte Übertragung in dem mindestens einen ausgewählten Ressourcenpool durchgeführt werden kann, und eines jeweiligen Tags, das für einen oder mehrere der Ressourcenpools des ersten Satzes empfangen wird, wobei jedes der Tags Informationen über mindestens eines von einem Kanalzustand des jeweiligen Ressourcenpools, einen Laststatus des jeweiligen Ressourcenpools und eine erwartete Kapazität des jeweiligen Ressourcenpools umfasst;
Anweisen (S120) einer Übertragungsvorrichtung, die konfliktbasierte Übertragung im jeweiligen mindestens einen des Frequenzbands, der Zeitperiode und des Codierraums des mindestens einen ausgewählten Ressourcenpools durchzuführen.

15. Computerprogrammprodukt, das einen Satz von Anweisungen umfasst, der, wenn er in einer Einrichtung ausgeführt wird, dazu ausgelegt ist, die Einrichtung zu veranlassen, das Verfahren nach einem der Ansprüche 13 und 14 umzusetzen.

## Revendications

1. Appareil, comprenant
un moyen d'information de configuration (50) adapté pour informer un dispositif terminal à propos d'un ou de plusieurs groupes de ressources (S50) constitués par un ensemble de groupes de ressources, dans lequel chacun des groupes de ressources comprend une ou plusieurs unités de ressources respectives, et chacune des unités de ressources est définie par au moins l'un parmi une bande de fréquences respective, une période temporelle respective et un espace de codage respectif,
un moyen de commande (60) adapté pour commander le dispositif terminal de sorte que, lorsque le dispositif terminal veut réaliser une émission basée sur la contention (S60), l'émission basée sur la contention peut être réalisée sur au moins l'un des groupes de ressources de l'ensemble, et
un moyen de fourniture d'étiquette adapté pour fournir, pour au moins l'un des groupes de ressources de l'ensemble, une étiquette respective au dispositif terminal, dans lequel chacune des étiquettes comprend des informations sur au moins l'un parmi une condition de canal du groupe de ressources respectif, un état de charge du groupe de ressources respectif et une capacité attendue du groupe de ressources respectif.

2. Appareil selon la revendication 1, dans lequel au moins l'un parmi
le moyen d'information de configuration (50) est adapté pour informer sur les un ou plusieurs groupes de ressources par une diffusion, et
le moyen d'information de configuration (50) est adapté pour informer sur les un ou plusieurs groupes de ressources par une signalisation dédiée au dispositif terminal.

3. Appareil selon l'une quelconque des revendications 1 et 2, dans lequel
le moyen de commande (60) est adapté pour indiquer un nombre des groupes de ressources de l'ensemble sur lesquels le dispositif terminal peut réaliser l'émission basée sur la contention lorsque l'ensemble de groupes de ressources comprend plusieurs groupes de ressources.

4. Appareil selon l'une quelconque des revendications 1 à 3, comprenant en outre au moins l'un parmi
un moyen d'indication de temps adapté pour indiquer une durée temporelle au cours de laquelle le dispositif terminal peut réaliser l'émission basée sur la contention ;
un moyen d'indication de validité adapté pour indiquer une durée de validité de l'ensemble ; et
un moyen d'indication de granularité adapté pour indiquer une granularité respective en laquelle la bande de fréquences, la période temporelle et l'espace de codage sont divisés.

5. Appareil selon l'une quelconque des revendications 1 à 4, comprenant en outre
un moyen de déduction adapté pour déduire, pour au moins l'un des groupes de ressources de l'ensemble, au moins l'un parmi un schéma de modulation respectif et un schéma de codage respectif ;
un moyen d'information de schéma adapté pour informer le dispositif terminal à propos du au moins un parmi le schéma de modulation respectif et le schéma de codage respectif pour le au moins un des groupes de ressources.

6. Appareil, mis en œuvre sous la forme d'un dispositif terminal, comprenant
un moyen d'apprentissage de configuration (100) adapté pour apprendre des choses à propos d'un ou de plusieurs groupes de ressources constitués par un premier ensemble de groupes de ressources sur la base d'un premier message de configuration reçu à partir d'un autre appareil (S100), dans lequel chacun des groupes de ressources comprend une ou plusieurs unités de ressources respectives, et chacune des unités de ressources est définie par au moins l'un parmi une bande de fréquences respective, une période temporelle respective et un espace de codage respectif ;
un moyen de sélection (110) adapté pour sélectionner au moins un groupe de ressources parmi les un ou plusieurs groupes de ressources sur la base d'une indication de commande reçue à partir de l'autre appareil (S110) selon laquelle une émission basée sur une contention peut être réalisée sur le au moins un groupe de ressources sélectionné ;
un moyen de fourniture d'instruction (120) adapté pour donner l'instruction à un dispositif d'émission de réaliser l'émission basée sur une contention sur le au moins un respectif parmi la bande de fréquences, la période temporelle et l'espace de codage du au moins un groupe de ressources sélectionné (S120), dans lequel les moyens de sélection sont en outre adaptés pour sélectionner le au moins un groupe de ressources sélectionné sur la base d'une étiquette respective reçue pour l'un ou plusieurs des groupes de ressources du premier ensemble, dans lequel chacune des étiquettes comprend des informations sur au moins l'un parmi une condition de canal du groupe de ressources respectif, un état de charge du groupe de ressources respectif et une capacité attendue du groupe de ressources respectif.

7. Appareil selon la revendication 6, dans lequel au moins l'un parmi
le premier message de configuration est compris dans un signal de diffusion, et
le premier message de configuration est compris dans une signalisation à l'appareil dédiée.

8. Appareil selon l'une quelconque des revendications 6 et 7, dans lequel
le premier ensemble de groupes de ressources comprend plusieurs groupes de ressources, et
l'indication de commande reçue indique un nombre des groupes de ressources du premier ensemble pour lesquels le moyen d'instruction peut donner une instruction au dispositif d'émission de réaliser l'émission basée sur une contention sur le au moins un respectif parmi la bande de fréquences, la période temporelle et l'espace de codage du au moins un groupe de ressources sélectionné, et
le moyen de sélection est adapté pour sélectionner le nombre indiqué de groupes de ressources ou moins que le nombre indiqué de groupes de ressources.

9. Appareil selon l'une quelconque des revendications 6 et 7, comprenant en outre
un moyen de déclenchement adapté pour déclencher le moyen d'instruction pour donner une instruction au dispositif d'émission si le premier message de configuration est reçu.

10. Appareil selon l'une quelconque des revendications 6 à 9, comprenant en outre
un moyen d'apprentissage de validité adapté pour apprendre, à partir d'une indication de validité reçue, une durée de validité du premier ensemble ;
un moyen de vérification de validité adapté pour vérifier si le premier ensemble est valide ;
un moyen d'interdiction adapté pour interdire au moyen d'instruction de donner des instructions au dispositif d'émission sur la base du au moins un groupe de ressources sélectionné si le premier ensemble n'est pas valide.

11. Appareil selon la revendication 10, comprenant en outre
un moyen de surveillance adapté pour surveiller, si le premier ensemble n'est pas valide, si un second message de configuration est reçu, dans lequel le second message de configuration indique qu'un ou plusieurs groupes parmi les groupes de ressources sont compris dans un second ensemble de groupes de ressources, dans lequel
le moyen d'instruction est adapté pour donner une instruction au dispositif d'émission sur la base d'un ou de plusieurs groupes de ressources du second ensemble.

12. Appareil selon l'une quelconque des revendications 6 à 11, comprenant en outre
un moyen d'apprentissage de schéma adapté pour apprendre, à partir d'une indication de schéma reçue, au moins un parmi un schéma de modulation respectif et un schéma de codage respectif pour au moins l'un des groupes de ressources du premier ensemble ;
un moyen de détermination de schéma adapté pour déterminer le au moins un parmi le schéma de modulation respectif et le schéma de codage respectif pour au moins un groupe parmi les au moins un groupe de ressources sélectionné, dans lequel
le moyen d'instruction est adapté pour donner une instruction au dispositif d'émission d'utiliser le au moins un déterminé parmi le schéma de modulation respectif et le schéma de codage respectif pour une émission sur le au moins un groupe de ressources sélectionné.

13. Procédé réalisé par un appareil, comprenant
l'information (S50) d'un dispositif terminal à propos d'un ou de plusieurs groupes de ressources constitués par un ensemble de groupes de ressources, dans lequel chacun des groupes de ressources comprend une ou plusieurs unités de ressources respectives, et chacune des unités de ressources est définie par au moins l'un parmi une bande de fréquences respective, une période temporelle respective et un espace de codage respectif,
la commande (S60) du dispositif terminal de sorte que, lorsque le dispositif terminal veut réaliser une émission basée sur la contention, l'émission basée sur la contention peut être réalisée sur au moins l'un des groupes de ressources de l'ensemble, et
la fourniture, pour au moins l'un des groupes de ressources de l'ensemble, d'une étiquette respective au dispositif terminal, dans lequel chacune des étiquettes comprend des informations sur au moins l'un parmi une condition de canal du groupe de ressources respectif, un état de charge du groupe de ressources respectif et une capacité attendue du groupe de ressources respectif.

14. Procédé réalisé par un appareil mis en œuvre sous la forme d'un dispositif terminal, comprenant
l'apprentissage (S100) de choses à propos d'un ou de plusieurs groupes de ressources constitués par un premier ensemble de groupes de ressources sur la base d'un premier message de configuration reçu à partir d'un autre appareil, dans lequel chacun des groupes de ressources comprend une ou plusieurs unités de ressources respectives, et chacune des unités de ressources est définie par au moins l'un parmi une bande de fréquences respective, une période temporelle respective et un espace de codage respectif ;
la sélection (S110) d'au moins un groupe de ressources parmi les un ou plusieurs groupes de ressources sur la base d'une indication de commande reçue à partir de l'autre appareil selon laquelle une émission basée sur une contention peut être réalisée sur le au moins un groupe de ressources sélectionné et sur la base d'une étiquette respective reçue pour l'un ou plusieurs parmi les groupes de ressources du premier ensemble, dans lequel chacune des étiquettes comprend des informations sur au moins l'un parmi une condition de canal du groupe de ressources respectif, un état de charge du groupe de ressources respectif et une capacité attendue du groupe de ressources respectif ;
l'instruction (S120) à un dispositif d'émission de réaliser l'émission basée sur une contention sur le au moins un respectif parmi la bande de fréquences, la période temporelle et l'espace de codage du au moins un groupe de ressources sélectionné.

15. Produit programme d'ordinateur comprenant un ensemble d'instructions qui, lorsqu'il est exécuté sur un appareil, est configuré pour amener l'appareil à mettre en œuvre le procédé selon l'une quelconque des revendications 13 et 14.
